# EUROPEAN PATENT APPLICATION

(11) **EP 2 977 234 A1**
(43) Date of publication of application: **27.01.2016**
(21) Application number: 15002148.3
(22) Date of filing: 20.07.2015
(51) Int. Cl.: B60C 23/04

(54) **TIRE PRESSURE SENSOR ASSEMBLY**

(30) Priority: 25.07.2014 US 201414341565
(71) Applicant: Caterpillar Inc., Peoria, IL 61629 (US)
(72) Inventor: Palacios, Miguel, Peoria, Illinois 61629-9510 (US)
(74) Representative: Kramer Barske Schmidtchen Patentanwälte PartG mbB

(57) **Abstract**

A tire pressure sensor assembly (116) and a method of servicing said assembly (140) is disclosed. The tire pressure sensor assembly (116) includes an adaptor housing (119) having an interior chamber (135) and a flow passage (131) connecting the chamber (135) to an outside of the housing (119), and a valve core (121) associated with said flow passage (131). The tire pressure sensor assembly (116) also includes a pressure sensor (125) within the chamber (135) of the adaptor housing (119) and further associated with the valve core (121), and a cap (127) adapted to seal the pressure sensor (125) at least partially within the chamber (135) of the housing (119).

## Description

### Technical Field

This patent disclosure relates generally to a pressure measurement sensor, and more particularly, to a tire fluid pressure measurement sensor assembly.

### Background

Pressure monitoring systems are conventionally used for measuring the pressure of a gas or a liquid, such as an air pressure. Tire pressure monitoring systems (TPMS), as an example, measure the inflation pressures of machine tires. Inflation pressure information is useful for maintaining optimal tire performance and avoiding unnecessary wear.

Knowledge of the pressure, and sometimes temperature, inside an off-the-road (OTR) tire of a machine may help the owner or operator of the machine increase the life of the machine's tires; and thereby, increase the productivity of the machine. OTR tires are often used on machines in industries such as mining, construction, farming, or transportation. For example, the machine may be an off-highway truck or an earth-moving machine, such as a wheel loader, excavator, dump truck, backhoe, motor grader, tractor, harvester, material handler, or the like.

OTR tires, in some instances, may be more than six feet in diameter, with a corresponding rim of 3 feet in diameter or more. Because of the size of such OTR tires, the OTR tires are not taken off like tires of a conventional automobile. Accordingly, it may be difficult to change or inflate an OTR tire on a machine at a worksite. Appropriate tools may not be available and environmental factors may complicate the task. On the other hand, if it is known that an OTR tire's pressure is decreasing, the OTR tire may be repaired or replaced in a service facility at a convenient time, and the machine's availability for work may be increased.

As discussed above, knowledge of tire pressure can prevent loss of tire life and/or reduce maintenance and service costs. Different tire pressure sensor assemblies have been used to measure tire pressure. For example, U.S. Patent No. 7,667,583 ("Petrucelli") issued February 23, 2010, discloses a tire pressure gauge. FIG. 1 of Petrucelli illustrates a tire pressure gauge that replaces a conventional cap to a conventional tire valve stem.

While prior art TPMSs are useful to some extent, there remains a need for a tire pressure sensor assembly that reduces inaccurate measurements of pressure sensors based on outside temperature fluctuations or damage due to debris. Accordingly, the presently disclosed tire pressure sensor assembly and methods for replacing tire pressure sensor assemblies or devices therein are directed at overcoming one or more of the disadvantages in currently available tire pressure sensor assemblies.

### Summary

In one aspect, the disclosure describes a tire pressure sensor assembly that includes an adaptor housing, a chamber, a valve core, a pressure sensor, and a cap. The adaptor housing defines a flow passage therethrough and a chamber. The valve core is associated with the adaptor housing flow passage. The pressure sensor is associated with the chamber of the adaptor housing and further associated with the valve core. The cap is adapted to seal the pressure sensor at least partially within the chamber of the adaptor housing.

In another aspect, the disclosure describes a method of servicing a tire pressure sensor assembly. The method includes removing a cap adapted to seal a pressure sensor at least partially within a chamber of an adaptor housing sealingly engaged with a rim. The adaptor housing includes a flow passage in fluid communication with an inner surface of the rim at a first end of the adaptor housing and the chamber at a second end of the adaptor housing. The pressure sensor is removed and a new sensor or a repaired sensor is placed into the chamber.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not constrained to limitations that solve any or all disadvantages noted in any part of this disclosure.

### Brief Description of the Drawings

FIG. 1 illustrates an outboard perspective view of a rim and tire assembly and a tire pressure sensor assembly.
FIG. 2 illustrates an exploded perspective view of an exemplary embodiment of a tire pressure sensor assembly.
FIG. 3 illustrates a sectional view of the tire pressure sensor assembly of FIG. 2.
FIG. 4 illustrates a sectional view of a tire pressure sensor assembly according to alternate construction.
FIG. 5 illustrates a sectional view of the tire pressure sensor assembly of FIG. 2 without a pressure sensor.
FIG. 6 illustrates a sectional view of a tire pressure sensor assembly according to alternate construction.
FIG. 7 illustrates an example tire pressure monitoring system.
FIG. 8 illustrates a block diagram of an exemplary method for servicing a tire pressure sensor assembly.

### Detailed Description

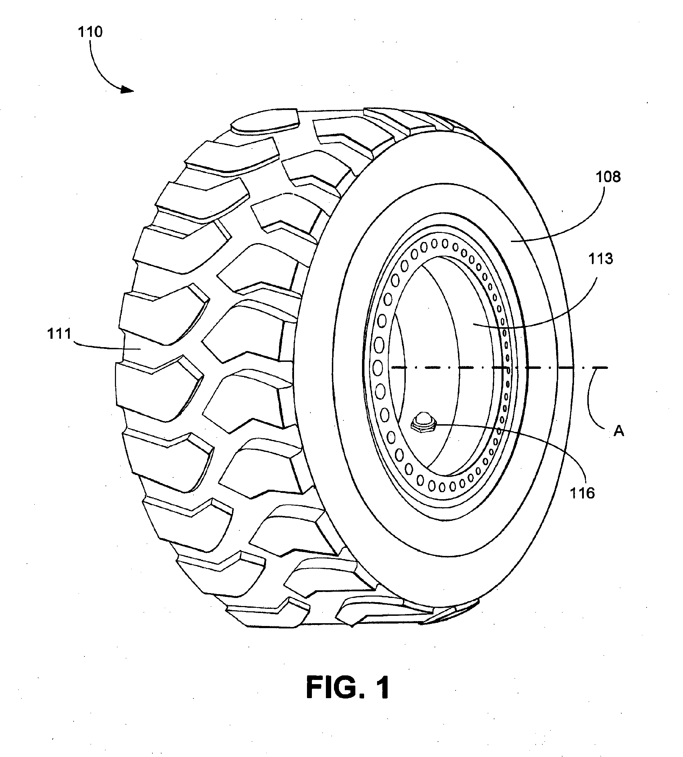

Disclosed herein is a tire pressure sensor assembly that may be attached to the inner section of a rim. FIG. 1 illustrates an outboard perspective view of an OTR rim and tire assembly 110. The rim and tire assembly 110 includes a tire 111, a rim 113, and a tire pressure sensor assembly 116 attached to an inner surface of the rim 113. The tire 111 may be rubber and attached with the rim 113. The rim 113 may include a cylindrical surface rotatable around an axis A, a mounting flange (not shown) extending radially inward from the cylindrical surface for connecting the rim 113 to a machine (not shown), and tire engagement flange 108 for engaging the side wall of the tire 111. Fluid, generally air, is introduced into the space between the tire 111 and the rim 113, thereby inflating the tire 111 to a desired pressure. A typical OTR tire may be pressurized between about 85 to 185 pounds per square inch of gauge pressure ("psig"). The recommended pressure for the tire 111 may vary based on the size of the machine and construction of the tire 111. Properly pressurized OTR tires may help increase the life of the OTR tires; and thereby, increase the productivity of an associated machine.

In addition, depicted in FIG. 1 is a tire pressure sensor assembly 116 attached with and extending through the cylindrical surface of the rim 113. The disclosed tire pressure sensor assembly 116 may be positioned anywhere on rim 113, but preferably positioned in a manner that is reasonably accessible for servicing.

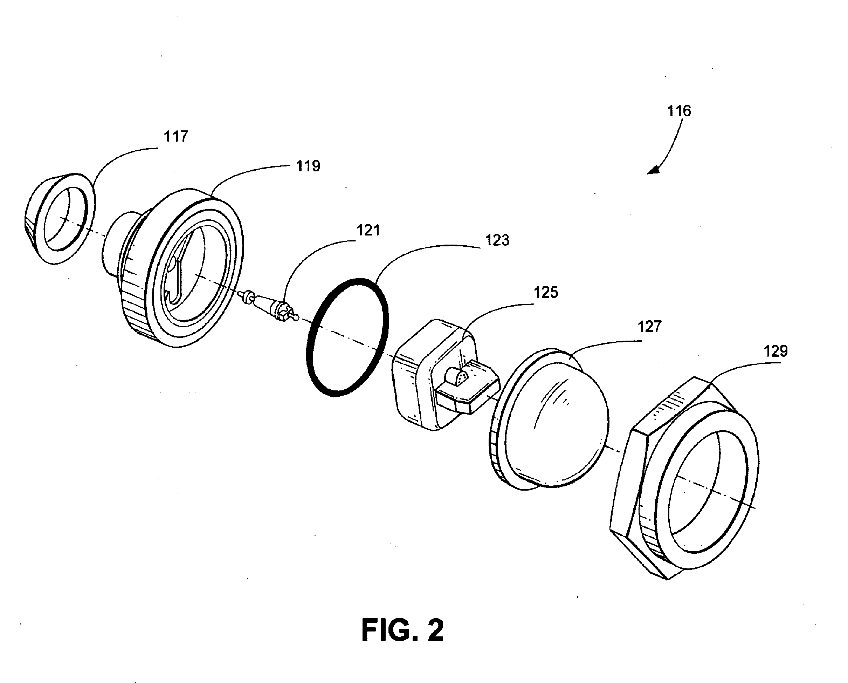

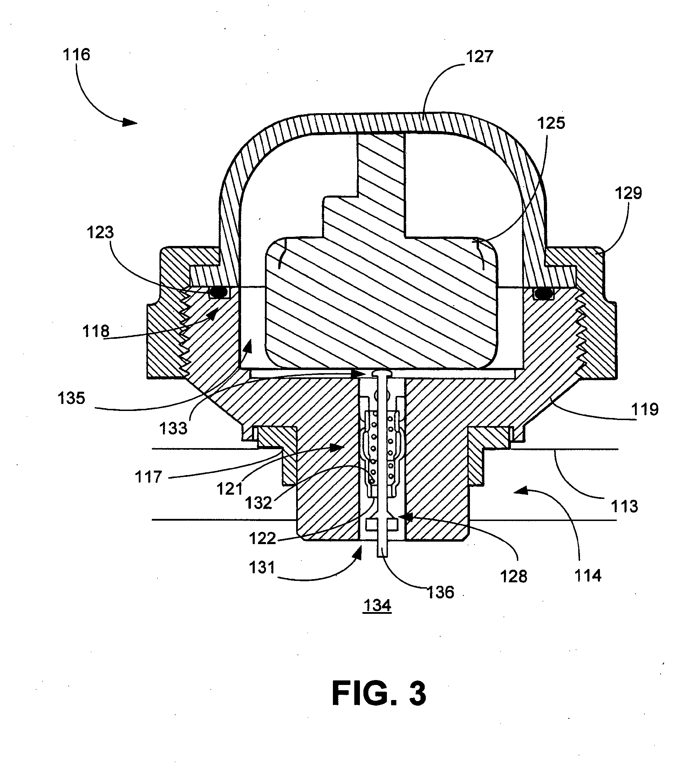

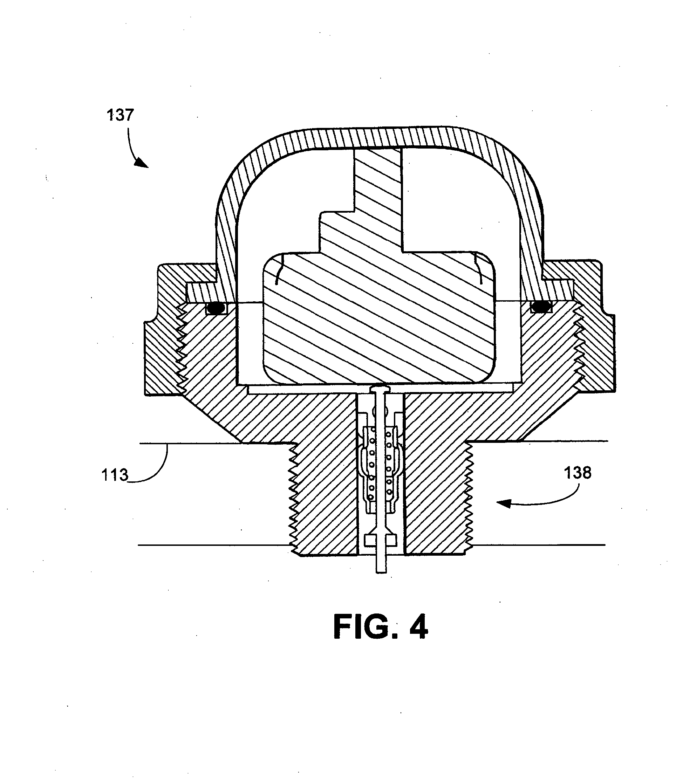

FIG. 2 and FIG. 3 illustrate an exploded perspective view and a sectional view of a tire pressure sensor assembly 116 of FIG. 2 mounted onto a rim and tire assembly 110. The grommet 117 may be an elastomeric grommet (such as, for example a rubber grommet) that is configured to engage at a first end 114 to the rim 113. The grommet 117 is used to help seal the tire pressure sensor assembly 116 to the rim 113 and may fit over the first end 114 of the adaptor housing 119, as shown. In addition to, or instead of, the grommet 117, the adaptor housing 119 may be threaded into the rim 113, welded to the rim 113, or otherwise attached to the rim 113. FIG. 4 illustrates an example alternative tire pressure sensor assembly 137 with threads 138 configured to engage corresponding threads in the rim 113.

Referring again to FIG. 3, the adaptor housing 119 defines a flow passage 131 and a chamber 135. The flow passage 131 is disposed in fluid communication with the chamber 135 through the rim 113. The valve core 121 (which in some examples may incorporate a Schrader valve or Presta valve) is coupled with the adaptor housing 119, so that the valve core 121 is at least partially disposed within the flow passage 131 of the adaptor housing 119. The valve core 121 may be disposed to be in fluid communication with a tire chamber 134 of the tire 111 coupled with the rim 113. A valve actuator 136 incorporated in the valve core 121, as shown in FIG. 3, is depressed by pressure sensor 125.

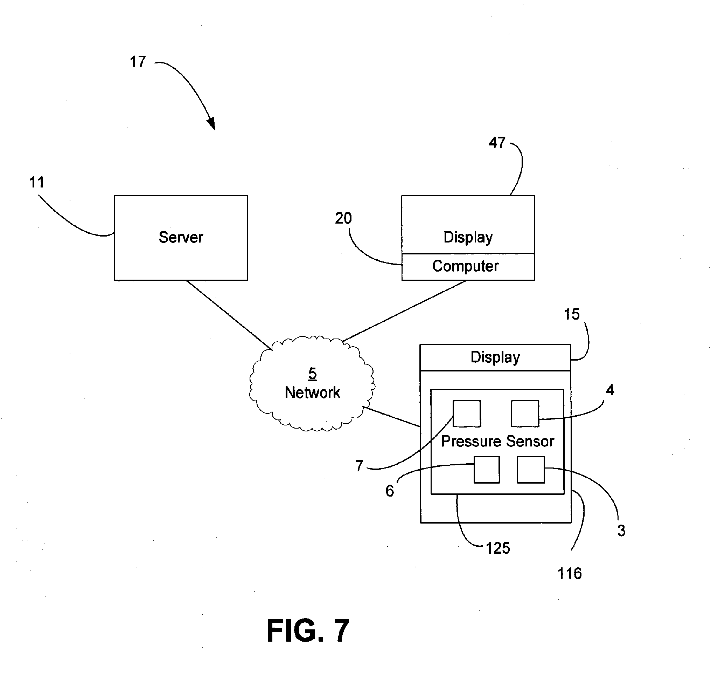

The tire pressure sensor assembly 116 also includes the O-ring 123 that may be disposed within a groove 118 formed within adaptor housing 119 and configured to receive the O-ring 123. The pressure sensor 125 of the tire pressure sensor assembly 116 may be at least partially disposed within the chamber 135 of the adaptor housing 119. The pressure sensor 125 may be composed of several elements that will be discussed further below with respect to FIG. 7. The O-ring 123 may be in contact with the adaptor housing 119 and the service cap 127, in order to assist in sealing the chamber 135 against fluid leakage to the outside when the service cap 127 is engaged. The service cap 127 is adapted to seal the pressure sensor 125 within the chamber 135 of the adaptor housing 119.

The tire pressure sensor assembly 116 may include a lock nut 129. The lock nut 129 may be removable and is adapted to assist in sealing the chamber 135, as described above, when tightened over the service cap 127. The lock nut 129 may be threaded or otherwise attached to the adaptor housing 119. The service cap 127 may be durable enough to protect the pressure sensor 125 from damage to harsh environments and debris. The service cap 127 may be made of a non-metallic material, such as a plastic (for example a glass-filled nylon). The service cap 127 may be made out of a material that minimizes the effect of outside temperature changes to the air in sealing the chamber 135. The functions of the service cap 127 and the lock nut 129 may be integrated into one piece. For example, the service cap 127 may include threads or another sealing mechanism that will assist in the sealing of chamber 135, but allow for the service cap 127 to be removable.

The pressure sensor 125 is adapted to measure pressure within the chamber 135 and provide an output a signal representative of a measured pressure. The pressure within the chamber 135 is assumed to be approximate to the pressure in the area 134 within the tire 111 associated with the rim 113. The pressure sensor 125 may also be adapted to measure temperature of the fluid in chamber 135 which is assumed to be approximate to the temperature within the tire 111. The pressure sensor 125 is removably associated with adaptor housing 119. If the pressure sensor 125 is within the chamber 135, the pressure sensor 125 may be adapted to depress the valve actuator 136 and allow fluid from the tire 111 to enter the chamber 135. Fluid from the tire 111 may fill the chamber 135 so that the pressure sensor 125 may measure the fluid pressure of the tire 111.

In FIG. 3 and FIG. 4, the valve actuator 136 is depressed, which fluidly connects the chamber 135 with a fluid-pressurized region of the tire 111. For example, the valve face 128 may move away from the valve seat 122 when the valve actuator 136 at the end 133 is depressed against the urging of a spring 132 to keep the valve actuator 136 in a default closed position. The service cap 127 and the lock nut 129 may hold the pressure sensor 125 in place against the urging of the spring 132 on the valve actuator 136. Because the valve face 128 moves away from the valve seat 122, an opening is created that causes fluid to move between the chamber 135 and the pressurized inside of the tire 111 via the flow passage 131.

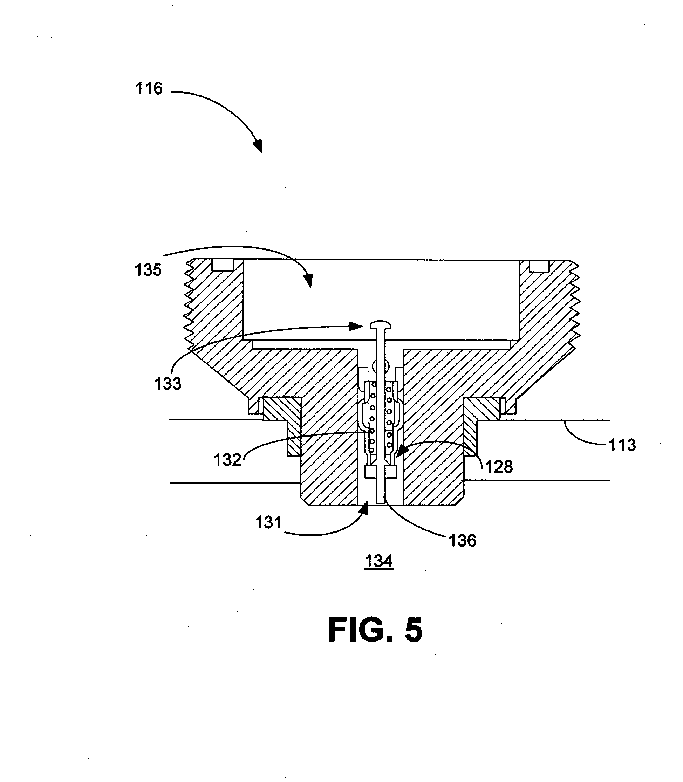

FIG. 5 illustrates a sectional view of the tire pressure sensor assembly 116 without a pressure sensor 125 located therein. The absence of the pressure sensor 125 or another object on end 133 of the valve actuator 136, places the valve actuator 136 into a default closed position, as shown in FIG. 5. The valve core 121 may include a poppet type valve assisted by a spring 132, which keeps the valve core 121 in the default closed position. In the default closed position, the valve face 128 rests against the valve seat 122 and does not allow fluid, such as fluid from tire chamber 134, into the chamber 135.

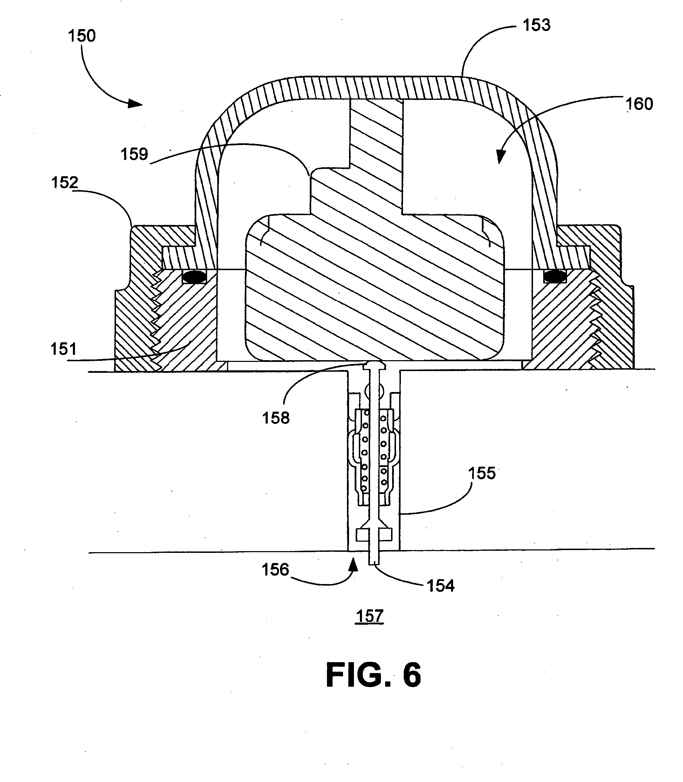

An alternative embodiment of a tire pressure sensor assembly 150, as discussed herein, is shown in FIG. 6. In this embodiment, a truncated adaptor housing 151 may be welded, fastened, glued, or otherwise attached to the rim 155 over an existing valve core 154 typically used to add or remove pressure from the tire chamber 157. The valve core 154 is associated with the truncated adaptor housing 151, such that the outwardly facing aspect of the valve core 154 is surrounded by the truncated adaptor housing 151 and at least partially disposed within the flow passage 156 of the rim 155. The valve core 154 is disposed to be in fluid communication with the tire chamber 157 of a tire 111 coupled with the rim 155. A valve actuator 158 incorporated in the valve core 154, as shown in FIG. 6, is depressed into an open position by the pressure sensor 159. The tire pressure sensor assembly 150 may include a lock nut 152. The lock nut 152 may be removable and is adapted to assist in sealing the chamber 160, as described above, when tightened over the service cap 153. The lock nut 152 may be threaded or otherwise attached with the truncated adaptor housing 151. As described herein in other embodiments, when installed, the service cap 153 may be adapted to press against the pressure sensor 159, which in turn depresses the valve actuator 158 into an open position thereby allowing fluid from the tire 111 to enter the chamber 160. Fluid from the tire 111 may fill the chamber 160 such that the pressure sensor 159 may measure the fluid pressure within the tire chamber 157.

FIG. 7 illustrates an example of a tire pressure monitoring system (TPMS) 17. A network 5 may communicatively connect the server 11, the computer 20, and the pressure sensor 125. Pressure sensor 125 may be located in the tire pressure sensor assembly 116. A monitor 47 is communicatively connected with the computer 20. Monitor 47 may display status of pressure sensor 125.

The pressure sensor 125 may communicate wirelessly with the computer 20 in order to report an air pressure, temperature, or any other desired measurement. The pressure sensor 125 may include a transceiver 4 configured to communicate signals between the pressure sensor 125 and a server 11. The pressure may be measured by module 7 (for example piezoelectric) within the pressure sensor 125. The temperature may be measured by module 6 (for example a thermocouple) within the pressure sensor 125. The pressure sensor 125 may communicate via a display 15 attached to the tire pressure sensor assembly 116. The display 15 may be integrated into the pressure sensor 125 or otherwise communicatively connected with the pressure sensor 125. If the display 15 is integrated into pressure sensor 125, the service cap 127 may be made out of a transparent material in order for the display 15 to be seen when the service cap is on.

The server 11 may receive and process information about one or more pressure sensors, such as the pressure sensor 125. The server 11 may process statistics and keep historical records of measured readings from the pressure sensor 125. The pressure sensor 125 may communicate measured pressure or environmental readings (for example temperature of fluid inside chamber 135) directly or indirectly to server 11 or the computer 20. The pressure sensor 125 may also communicate its location, such as whether it is located in the tire pressure sensor assembly 116.

The communications paths described herein may be wired or wireless. The systems and subsystems discussed herein may be distributed or integrated into one device. The examples disclosed herein may also apply to other machines that may use a tire pressure monitoring system.

### Industrial Applicability

In general, the technology described in the present disclosure has industrial applicability in a variety of settings such as, but not limited to, reducing the time to replace or repair a pressure sensor, while protecting a pressure sensor from damage. Its industrial applicability extends to virtually all tires for motorized transport platforms with tires, including automobiles, buses, trucks, tractors, industrial work machines and most off-road machines utilized in agriculture, mining, and construction.

The disclosed tire pressure sensor assembly 116 allows a pressure sensor 125 to be protected better from external debris than a pressure sensor attached to an end of a valve stem. In addition, for the tire pressure sensor assembly 116 there is no risk of malfunction or being rendered inoperable based on damage to an extended valve stem, which is evident in some conventional tire pressure sensor setups.

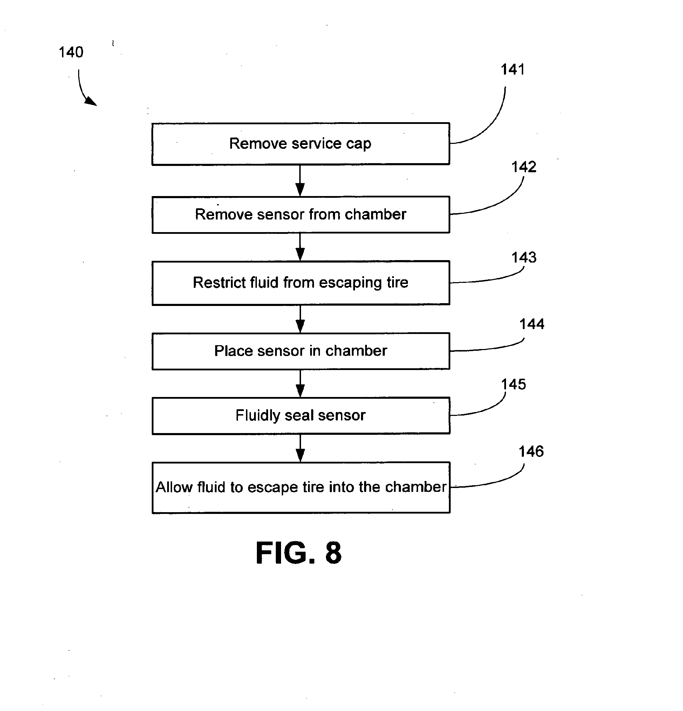

FIG. 8 illustrates an exemplary method 140 for servicing the tire pressure sensor assembly 116. At step 141, the service cap 127 may be removed. The service cap 127 may be removed by unscrewing the lock nut 129, which may compress a flange of the service cap 127 against a face of the adaptor housing 119. At step 142, the pressure sensor 125 may be removed from the chamber 135. Pressure sensor 125 may be removed in order to replace, repair, or otherwise adjust or maintain the pressure sensor 125. For example, as shown in FIG. 7, a battery 3 that powers the pressure sensor 125 may be replaced to restore functionality of the pressure sensor 125.

At step 143, fluid is restricted from escaping the tire 111. With regard to step 143, the valve core 121 may be adapted to keep significant fluid from escaping the tire 111 that is fluidly connected with the chamber 135. For example, the valve core 121 may be a spring valve core (for example, a Schrader valve) that seals fluid flow between the tire 111 and the chamber 135 when the valve actuator 136 of the valve core 121 is not depressed by the pressure sensor 125. At step 144, the pressure sensor 125 may be replaced, repaired, or otherwise maintained and put back in the chamber 135.

At step 145, the pressure sensor 125 is fluidly sealed in the chamber 135. The service cap 127 may be installed to fluidly seal the chamber 135, and the lock nut 129 may be installed in a manner to secure the service cap 127 to the adaptor housing 119. At step 146, fluid is allowed to escape from the tire 111 into the chamber 135. The pressure sensor 125 may be used to depress the valve actuator 136, which allows fluid to fill the chamber 135. At step 146, the pressure sensor 125 may be used to measure air pressure of the tire 111 that is coupled with the rim 113.

The tire pressure sensor assembly 116 and method 140 may allow for a less time-consuming replacement, repair, or other servicing of the pressure sensor 125 when compared to current tire pressure sensor assemblies. The tire pressure sensor assembly 116 may be used as a substitute for a valve stem. For example, when the service cap 127 and the pressure sensor 125 are removed, the tire 111 may be pressurized via the valve core 121 and the flow passage 131.

It will be appreciated that the foregoing description provides examples of the disclosed system, structure, and methods. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

Recitation of ranges of values herein are merely intended to serve as a shorthand method of referring individually to each separate value falling within the range, unless otherwise indicated herein, and each separate value within such range should be construed as if it were individually recited herein. All methods described herein can be performed in any suitable order unless otherwise indicated herein or otherwise clearly contradicted by context.

## Claims

1. A tire pressure sensor assembly (116), said tire pressure sensor assembly (116) comprising:
an adaptor housing (119) defining at least in part an interior chamber (135) and a flow passage (131) connecting said chamber (135) to an outside of said adaptor housing (119);
a valve core (121) associated with said flow passage (131), said valve core (121) providing selective fluid communication between said chamber (135) and the outside of said adaptor housing (119);
a pressure sensor (125) associated with said chamber (135) of said adaptor housing (119), and further associated with said valve core (121); and
a cap (127) adapted to seal said pressure sensor (125) at least partially within said chamber (135) of said adaptor housing (119).

2. The tire pressure sensor assembly (116) of claim 1,
wherein said adaptor housing is configured to engage at a first end with a rim.

3. The tire pressure sensor assembly (116) of claim 2,
wherein said flow passage is disposed in fluid communication through an inner surface of the rim.

4. The tire pressure sensor assembly (116) of claim 3,
wherein said valve core is disposed in fluid communication with a fluid-pressurized region of a tire associated with the rim.

5. The tire pressure sensor assembly (116) of claim 1,
wherein said valve core is at least partially disposed within said flow passage.

6. A method for servicing a tire pressure sensor assembly (116), the method comprising:
removing a cap (127) adapted to seal a first pressure sensor (125) at least partially within a chamber (135) of an adaptor housing (119) sealingly engaged with a rim, said adaptor housing (119) comprising a flow passage (131) in fluid communication with an inner surface of said rim (133) at a first end of said adaptor housing (119) and said chamber (135) at a second end of said adaptor (119) housing;
removing said first pressure sensor (125); and
placing a second pressure sensor into said chamber (135).

7. The method of claim 6, wherein said second pressure sensor is a repaired version of said first pressure sensor (125).

8. The method of claim 6, further comprising placing said cap (127) to seal said chamber (135).

9. The method of claim 6, wherein said cap (127) is non-metallic.

10. The method of claim 6, further comprising pressurizing a tire (111) attached to said rim (113) via said flow passage (131).
